# EUROPEAN PATENT APPLICATION

(11) **EP 4 395 215 A1**
(43) Date of publication of application: **03.07.2024**
(21) Application number: 22871324.4
(22) Date of filing: 01.03.2022
(51) Int. Cl.: H04L 5/00

(54) **CARRIER DATA PROCESSING METHOD AND APPARATUS, NETWORK DEVICE, AND STORAGE MEDIUM**

(30) Priority: 26.09.2021 CN 202111128244
(71) Applicant: Sanechips Technology Co., Ltd., Shenzhen, Guangdong 518055 (CN)
(72) Inventor: CHANG, Liang, Shenzhen, Guangdong 518057 (CN); ZOU, Fei, Shenzhen, Guangdong 518057 (CN); XUE, Shuai, Shenzhen, Guangdong 518057 (CN)
(74) Representative: Canzler & Bergmeier Patentanwälte Partnerschaft mbB
(86) International application number: PCT/CN2022/078512
(87) International publication number: WO 2023/045258

(57) **Abstract**

A carrier data processing method and apparatus, a network device, and a storage medium. The carrier data processing method comprises: acquiring a plurality of sets of carrier data and a plurality of sets of carrier aggregation configuration parameters corresponding to the carrier data (S100); performing first processing on the plurality of sets of carrier data according to the carrier aggregation configuration parameters to obtain frequency-domain carrier aggregation data (S200); performing second processing on the frequency-domain carrier aggregation data to obtain time-domain carrier aggregation data (S300); and performing third processing on the time-domain carrier aggregation data to obtain a plurality of sets of time-domain carrier data (S400).

## Description

### CROSS-REFERENCE TO RELATED APPLICATIONS

The present disclosure is based on and claims priority from the Chinese patent application No. 202111128244.4 filed on September 26, 2021, the entire disclosure of which is incorporated herein by reference.

### TECHNICAL FIELD

Embodiments of the present disclosure relate to, but are not limited to, the field of communication technology, and in particular, to a carrier data processing method and apparatus, a network device, and a storage medium.

### BACKGROUND

In the field of communication technology, the wireless communication system needs to support a high data transmission rate; and multiple pieces of carrier data in the system are aggregated by the carrier data aggregation technology to form a larger transmission bandwidth, thereby fulfilling the high-speed transmission of data. However, no relevant means has been proposed yet to implement effective management of carrier data aggregation, resulting in a relatively low efficiency in carrier data aggregation.

### SUMMARY

The following is a summary of the subject matter described in detail in the present disclosure. This summary is not intended to limit the protection scope of the claims.

Embodiments of the present disclosure provide a carrier data processing method and apparatus, a network device, and a storage medium.

In a first aspect, an embodiment of the present disclosure provides a carrier data processing method, including: acquiring multiple groups of carrier data and a carrier aggregation configuration parameter corresponding to the multiple groups of carrier data; performing first processing on the multiple groups of carrier data according to the carrier aggregation configuration parameter to obtain frequency-domain carrier aggregation data; performing second processing on the frequency-domain carrier aggregation data to obtain time-domain carrier aggregation data; and performing third processing on the time-domain carrier aggregation data to obtain multiple groups of time-domain carrier data.

In a second aspect, an embodiment of the present disclosure further provides a carrier data processing apparatus, including: a first processing module configured to acquire multiple groups of carrier data and a carrier aggregation configuration parameter corresponding to the multiple groups of carrier data; a second processing module configured to perform first processing on the multiple groups of carrier data according to the carrier aggregation configuration parameter to obtain frequency-domain carrier aggregation data; a third processing module configured to perform second processing on the frequency-domain carrier aggregation data to obtain time-domain carrier aggregation data; and a fourth processing module configured to perform third processing on the time-domain carrier aggregation data to obtain multiple groups of time-domain carrier data.

In a third aspect, an embodiment of the present disclosure further provides a network device, including: at least one processor; and at least one memory configured to store at least one program; wherein the at least one program, when executed by the at least one processor, causes the carrier data processing method as described above to be implemented.

In a fourth aspect, an embodiment of the present disclosure further provides a computer-readable storage medium having computer-executable instructions stored thereon, wherein the computer-executable instructions are configured to cause the carrier data processing method as described above to be implemented.

Other features and advantages of the present disclosure will be set forth in the description which follows, and will become apparent from the description at least partially, or be understood by implementing the present disclosure. Objects and other advantages of the present disclosure may be realized and obtained by means of the structures specified in the description, appended claims and drawings.

### BRIEF DESCRIPTION OF DRAWINGS

Accompanying drawings are provided for further understanding of the technical solution of the present disclosure and constitute a part of the specification. Hereinafter, these drawings are intended to explain the technical solution of the present disclosure together with the embodiments of the present disclosure, but should not be considered as a limitation to the technical solution of the present disclosure.
FIG. 1 is a flowchart of a carrier data processing method according to an embodiment of the present disclosure;
FIG. 2 is a specific flowchart of obtaining frequency-domain carrier aggregation data according to another embodiment of the present disclosure;
FIG. 3 is a specific flowchart of obtaining time-domain carrier aggregation data according to another embodiment of the present disclosure;
FIG. 4 is a specific flowchart of obtaining multiple groups of time-domain carrier data according to another embodiment of the present disclosure;
FIG. 5 is a flowchart of a carrier data processing method according to another embodiment of the present disclosure;
FIG. 6 is a detailed flowchart of normalizing multiple groups of carrier data according to another embodiment of the present disclosure;
FIG. 7 is a flowchart of a carrier data processing method according to yet another embodiment of the present disclosure;
FIG. 8 is a schematic diagram showing a data format of multiple groups of carrier data according to an embodiment of the present disclosure;
FIG. 9 is a schematic diagram showing a data format of frequency-domain carrier aggregation data according to an embodiment of the present disclosure;
FIG. 10 is a schematic diagram showing a data format of time-domain carrier aggregation data according to an embodiment of the present disclosure;
FIG. 11 is a schematic diagram showing a data format of multiple groups of time-domain carrier data according to an embodiment of the present disclosure;
FIG. 12 is a schematic configuration diagram of a carrier data processing apparatus according to another embodiment of the present disclosure; and
FIG. 13 is a schematic configuration diagram of a network device according to another embodiment of the present disclosure.

### DETAIL DESCRIPTION OF EMBODIMENTS

In order to make the objects, technical solutions and advantages of the present disclosure clearer and more apparent, the present disclosure is further described in detail below with reference to the accompanying drawings and embodiments. It will be appreciated that the specific embodiments described herein are merely for illustration of the present disclosure and are not intended to limit the present disclosure.

It should be noted that although functional module divisions are provided in apparatus diagrams and logical orders are shown in flowcharts, in some cases, modules may be divided differently than those shown in the apparatus, and operations shown or described may be performed out of the order shown in the flowcharts. Terms "first", "second", and the like in the description, the claims and the drawings are used for the purpose of distinguishing similar objects instead of indicating a specific order or sequence.

The present disclosure provides a carrier data processing method and apparatus, a network device, and a storage medium. The carrier data processing method includes: acquiring multiple groups of carrier data and a carrier aggregation configuration parameter corresponding to the carrier data; performing first processing on the multiple groups of carrier data according to the carrier aggregation configuration parameter to obtain frequency-domain carrier aggregation data; performing second processing on the frequency-domain carrier aggregation data to obtain time-domain carrier aggregation data; and performing third processing on the time-domain carrier aggregation data to obtain multiple groups of time-domain carrier data. Firstly, multiple groups of carrier data and a carrier aggregation configuration parameter corresponding to the carrier data are acquired. Then, first processing is performed on the multiple groups of carrier data according to the carrier aggregation configuration parameter to obtain frequency-domain carrier aggregation data. Next, second processing is performed on the obtained frequency-domain carrier aggregation data to obtain time-domain carrier aggregation data. Finally, third processing is performed on the obtained time-domain carrier aggregation data to obtain multiple groups of time-domain carrier data. By aggregating corresponding carrier data according to the carrier aggregation configuration parameter, carrier data aggregation can be effectively managed, and the carrier data aggregation efficiency can be improved.

The embodiments of the present disclosure will be further explained below with reference to the drawings.

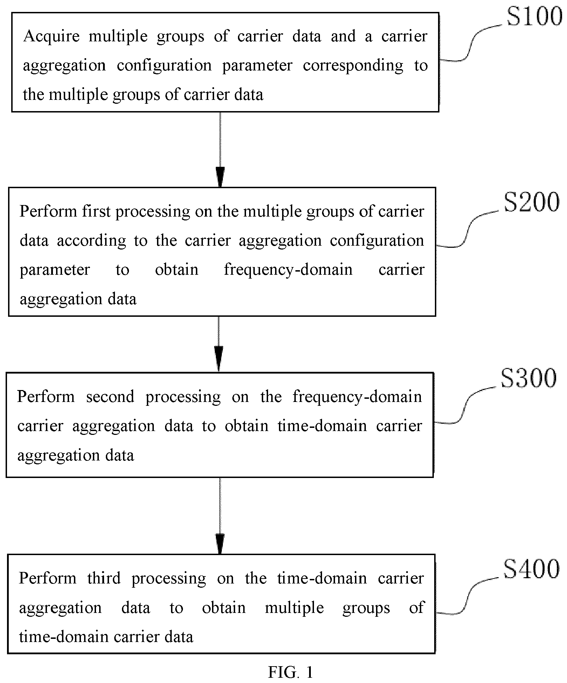

As shown in FIG. 1, FIG. 1 is a flowchart of a carrier data processing method according to an embodiment of the present disclosure. The carrier data processing method includes, but is not limited to, operations S100, S200, S300, and S400.

At operation S100, acquiring multiple groups of carrier data and a carrier aggregation configuration parameter corresponding to the multiple groups of carrier data.

At operation S200, performing first processing on the multiple groups of carrier data according to the carrier aggregation configuration parameter to obtain frequency-domain carrier aggregation data.

At operation S300, performing second processing on the frequency-domain carrier aggregation data to obtain time-domain carrier aggregation data.

At operation S400, performing third processing on the time-domain carrier aggregation data to obtain multiple groups of time-domain carrier data.

It should be noted that firstly, multiple groups of carrier data and a carrier aggregation configuration parameter corresponding to the carrier data are acquired; then first processing is performed on the multiple groups of carrier data according to the carrier aggregation configuration parameter to obtain frequency-domain carrier aggregation data; next, second processing is performed on the obtained frequency-domain carrier aggregation data to obtain time-domain carrier aggregation data; and finally, third processing is performed on the obtained time-domain carrier aggregation data to obtain multiple groups of time-domain carrier data. By aggregating corresponding carrier data according to the carrier aggregation configuration parameter, carrier data aggregation can be effectively managed, and the carrier data aggregation efficiency can be improved.

It should be understood that by means of the carrier aggregation configuration parameter corresponding to the carrier data, the received multiple groups of carrier data can be aggregated as required, so that management of the carrier data aggregation is simpler and more effective.

It should be noted that in wired and radio technologies, a signal to be transmitted is used to modulate another high-frequency signal, so that the modulated high-frequency oscillation carries information contained in the modulated signal, and then is transmitted. This modulated high-frequency signal is called a carrier.

It is worth noting that the carrier data in the embodiments of the present disclosure includes a carrier containing a modulated signal rather than a pure carrier. In other words, the carrier data includes information contained in the modulated signal which is obtained by modulating an original baseband signal. The baseband signal is the original signal to be transmitted, but due to the fact that the baseband signal is often in a lower frequency domain which is inconvenient for transmission, the baseband signal is desired to be modulated to a higher frequency domain by a carrier to facilitate signal transmission.

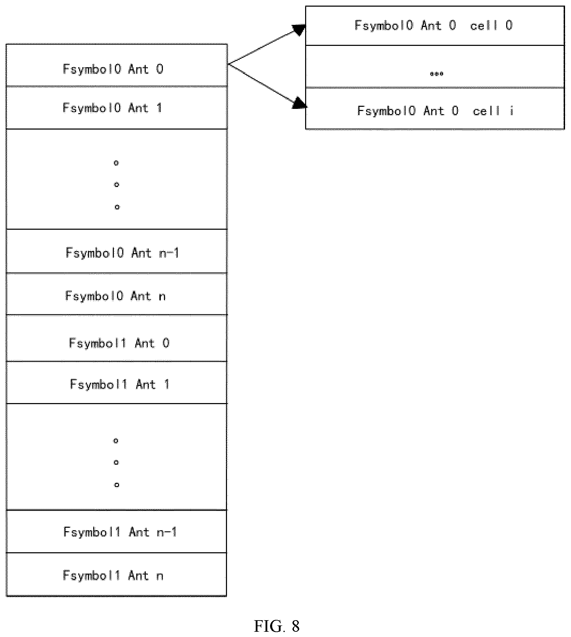

It should be understood that the multiple groups of carrier data are multiple groups of carrier data from different sources. Exemplarily, one base station may have a plurality of receiving antennas, while each antenna may receive carrier data sent from different mobile phone terminals. That is, one antenna of the base station may receive multiple groups of carrier data, and after receiving the multiple groups of carrier data, the base station may further store the received multiple groups of carrier data in a preset storage section. When the multiple groups of carrier data are stored in the preset storage section, the multiple groups of carrier data are provided with corresponding address index marks, through which other data processing modules can extract the corresponding carrier data. Exemplarily, as shown in FIG. 8, the multiple groups of carrier data are carrier data received and acquired by the base station, and one group of carrier data includes Fsymbol0 Ant 0 to Fsymbol0 Ant n, where Fsymbol represents a symbol for distinguishing different pieces of carrier data, Ant represents an antenna, and cell represents a cell.

It should be understood that the carrier aggregation configuration parameter may be set manually, or through a software terminal. Exemplarily, 3 groups of the carrier data are received, but 2 groups of carriers are desired to be aggregated. Therefore, the carrier aggregation configuration parameter may be manually configured to 2, so that aggregation can be performed on 2 groups of carriers, which makes the carrier aggregation management simpler and faster. Alternatively, bandwidths of the carriers may be monitored and used in subsequent carrier merging. For example, 4 groups of carrier data each with a bandwidth of 5M are received, but in fact, only 15M of the bandwidth resources can be transferred. Therefore, a software terminal may be used to configure the carrier aggregation configuration parameter to 3 according to the bandwidth condition, so that aggregation is performed on 3 groups of carrier data.

It should be understood that first processing is performed on the multiple groups of carrier data according to the carrier aggregation configuration parameter to obtain frequency-domain carrier aggregation data; where the first processing is aggregation of multiple groups of carrier data, that is, aggregating multiple pieces of carrier data into a wider frequency spectrum, or aggregating discontinuous frequency spectrum fragments. Multi-carrier aggregation may be further divided into contiguous carrier aggregation and non-contiguous carrier aggregation. Second processing is performed on the frequency-domain carrier aggregation data to obtain time-domain carrier aggregation data, where the second processing may be time-frequency transform, that is, performing time-frequency transform on the frequency-domain carrier aggregation data to further obtain time-domain carrier aggregation data. Third processing is performed on the time-domain carrier aggregation data to obtain multiple groups of time-domain carrier data, where the third processing may be segmentation, that is, segmenting the time-domain carrier aggregation data to obtain multiple groups of time-domain carrier data. It should be noted that the time-domain carrier data is data that can be directly acquired and processed by other data processing modules, and it will be understood that the multiple groups of carrier data obtained in the embodiments of the present disclosure are subject to aggregation, time-frequency transform, and segmentation, to obtain multiple groups of time-frequency carrier data.

It should be noted that the carrier data attribute information characterizes an effective length and the number of sampling points to be processed in the carrier data, where the sampling points to be processed are real and valid information in the carrier data, and the number of sampling points to be processed is the number of real and valid information pieces in the carrier data.

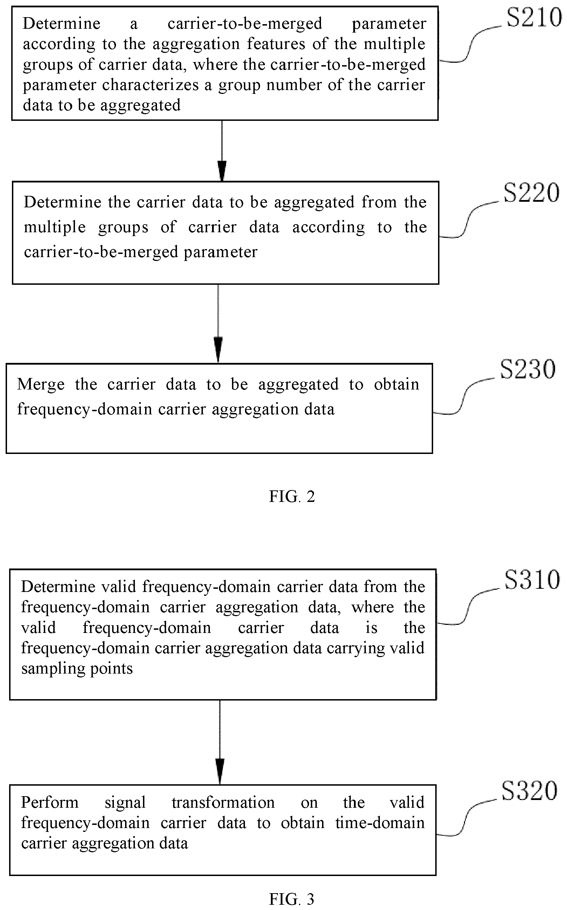

In addition, in one embodiment, the carrier aggregation configuration parameter includes a carrier aggregation function switch parameter which characterizes an aggregation feature of the multiple groups of carrier data, and as shown in FIG.2, the operation S200 may include, but is not limited to, operations S210, S220, and S230.

At operation S210, determining a carrier-to-be-merged parameter according to the aggregation features of the multiple groups of carrier data, where the carrier-to-be-merged parameter characterizes a group number of the carrier data to be aggregated.

At operation S220, determining the carrier data to be aggregated from the multiple groups of carrier data according to the carrier-to-be-merged parameter.

At operation S230, merging the carrier data to be aggregated to obtain frequency-domain carrier aggregation data.

It should be noted that firstly, a carrier-to-be-merged parameter are determined according to the aggregation features of the multiple groups of carrier data, where the carrier-to-be-merged parameter characterizes a group number of the carrier data to be aggregated; next, the carrier data to be aggregated is determined from the multiple groups of carrier data according to the carrier-to-be-merged parameter, and finally, the carrier data to be aggregated are merged to obtain frequency-domain carrier aggregation data.

It should be understood that the carrier aggregation function switch parameter characterizes an aggregation feature of the carrier data. In other words, the carrier aggregation function switch parameter represents whether the aggregation function switch of the corresponding carrier data is enabled. The carrier data can be aggregated only when the carrier data aggregation function switch is on. Exemplarily, 3 groups of carrier data are acquired, in which only 2 groups of carrier data have the aggregation function switch in an on state, then the carrier-to-be-merged parameter is 2, so that the corresponding two groups of carrier data can be subsequently aggregated according to the carrier-to-be-merged parameter.

It is worth noting that the carrier aggregation configuration parameter maybe set manually or through a software system. Exemplarily, 3 groups of carrier data are acquired, in which the aggregation function switches of 2 groups are set to on manually, then the carrier-to-be-merged parameter is 2, and the two groups of carrier data with the aggregation function switches in the on state can be aggregated and merged. In addition, a bandwidth of the carrier data may be further set in the software system as a basis for carrier data aggregation. Exemplarily, 4 groups of carrier data, with bandwidths of 2M, 3M, 4M and 9M respectively, are obtained, but the bandwidth for data transmission this time set in the software system is only 8M. Then, the software system set the aggregation function switches of the first 3 groups of carrier data to on, so that subsequent aggregation is performed on the first three groups of carrier data with the aggregation function switch set to on.

It should be understood that the carrier-to-be-merged parameter is obtained from the carrier aggregation function switch parameter; and the number of aggregation function switches of the carrier data set to on in the carrier aggregation function switch parameter is the carrier-to-be-merged parameter. Exemplarily, if the number of aggregation function switches of the carrier data set to on in the carrier aggregation function switch parameter is 2, the carrier-to-be-merged parameter is 2.

It should be noted that after the carrier data to be aggregated is aggregated and merged, value complement, for example, zero adding, may be further performed on the frequency-domain carrier aggregation data, so that the frequency-domain carrier aggregation data has enough sampling points for the subsequent time-frequency transform. The sampling point is real and valid information in the carrier aggregation data, i.e., information contained in the original baseband signal.

In addition, in one embodiment, as shown in FIG. 3, the operation S300 may include, but is not limited to, operations S310, S320, and S320.

At operation S310, determining valid frequency-domain carrier data from the frequency-domain carrier aggregation data, where the valid frequency-domain carrier data is the frequency-domain carrier aggregation data carrying valid sampling points.

At operation S320, performing signal transformation on the valid frequency-domain carrier data to obtain time-domain carrier aggregation data.

It should be noted that firstly, valid frequency-domain carrier data is determined from the frequency-domain carrier aggregation data, where the valid frequency-domain carrier data is the frequency-domain carrier aggregation data carrying valid sampling points; and then signal transformation is performed on the valid frequency-domain carrier data to obtain time-domain carrier aggregation data.

It is worth noting that the valid frequency-domain carrier data is the frequency-domain carrier aggregation data carrying valid sampling points; and the valid sampling points are data actually containing valid information, i.e., baseband data information to be processed and analyzed, in the frequency-domain carrier aggregation data. It will be understood that during the signal transformation on the frequency-domain carrier aggregation data, merely valid frequency-domain carrier data in the frequency-domain carrier aggregation data is to be processed. Exemplarily, if the carrier-to-be-merged parameter is 3, it means that only three groups of carrier data are subject to aggregation and merging, and then, valid frequency-domain carrier data in the frequency-domain carrier aggregation data can be determined according to the carrier-to-be-merged parameter, so that the signal transformation is performed on the valid frequency-domain carrier data.

It should be understood that the signal transformation may be time-frequency transform, that is, performing time-frequency transform on frequency-domain carrier aggregation data to transform the frequency domain data into time-frequency data, so as to obtain time-domain carrier aggregation data. The time-frequency transform may also be Fourier transform or fast Fourier transform, that is, transforming frequency-domain carrier aggregation data in the frequency domain into time-domain carrier aggregation data in the time domain. It should be noted that before performing the Fourier transform or fast Fourier transform, a size of the basic processing unit should be set, for example, to 256, which means that 256 sampling points are processed at a time. However, if the number of sampling points in the valid frequency-domain carrier data is less than 256, zero adding is performed so that the Fourier transform or fast Fourier transform can be completed. It will be understood that the zero adding will not affect validity of the data.

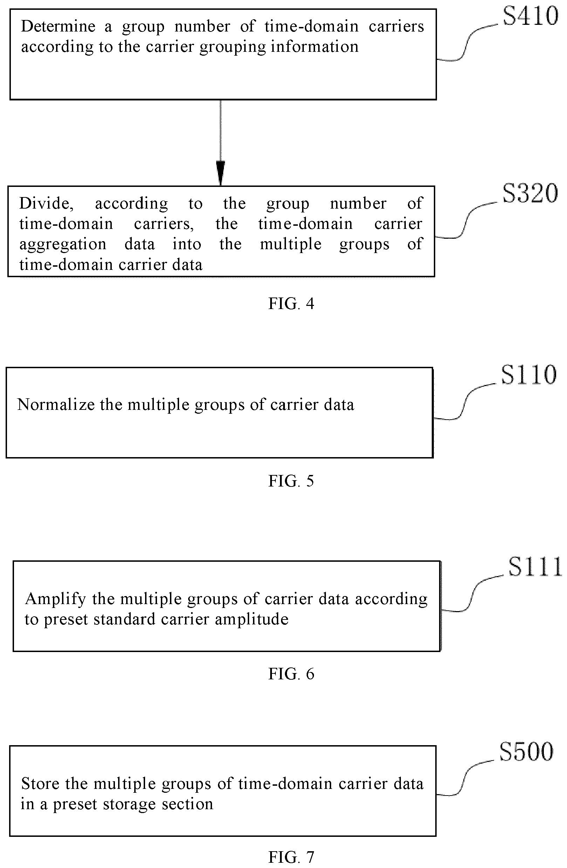

In addition, in one embodiment, the time-domain carrier aggregation data carries carrier grouping information, and as shown in FIG. 4, the operation S400 may include, but is not limited to, operations S410 and S420.

At operation S410, determining a group number of time-domain carriers according to the carrier grouping information.

At operation S420, dividing, according to the group number of time-domain carriers, the time-domain carrier aggregation data into the multiple groups of time-domain carrier data.

It should be noted that a group number of time-domain carriers is determined according to the carrier grouping information, and the time-domain carrier aggregation data is divided into the multiple groups of time-domain carrier data according to the group number of time-domain carriers.

It will be understood that the time-domain carrier aggregation data carries carrier grouping information, based on which the time-domain carrier aggregation data can be segmented, and thus the multiple groups of time-domain carrier data can be obtained. It is worth noting that the carrier grouping information may be an information tag carried in the time-domain carrier aggregation data, and the time-domain carrier aggregation data can be segmented by the information tag to obtain multiple groups of time-domain carrier data, and the original multiple groups of frequency-domain carrier data information that are aggregated can be restored to obtain multiple groups of time-domain carrier data corresponding to the original multiple groups of frequency-domain carrier data information, thereby facilitating subsequent acquisition and utilization of the multiple groups of time-domain carrier data that are obtained by segmentation by other data processing modules.

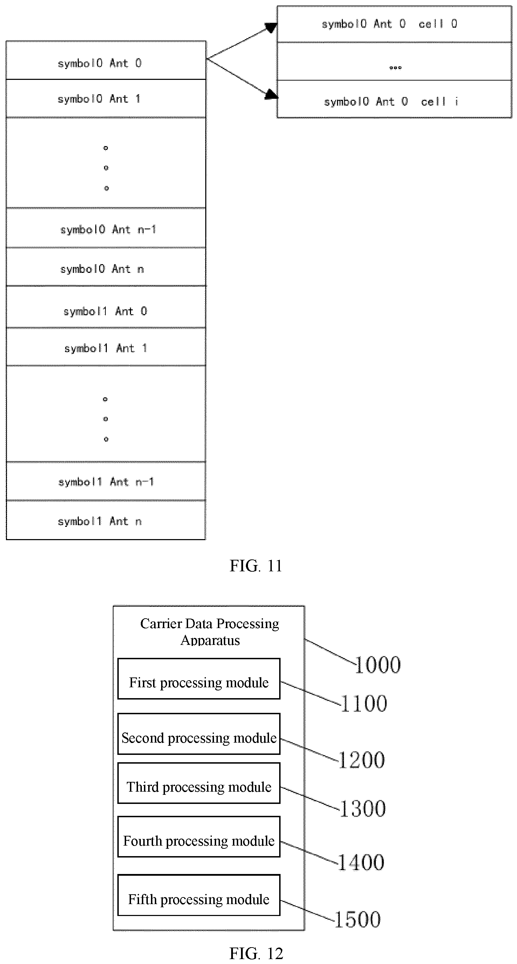

It is worth noting that the time-domain carrier aggregation data is divided into multiple groups of time-domain carrier data according to the carrier grouping information; and the segmentation includes dividing the time-domain carrier aggregation data to obtain multiple groups of time-domain carrier data corresponding to the original multiple groups of frequency-domain carrier data. Exemplarily, the carrier data acquired by the base station is subject to aggregation, time-frequency transform, and segmentation, to output multiple groups of time-domain carrier data in a data format as shown in FIG. 11, where one group of time-domain carrier data includes symbol0 Ant 0 to symbol0 Ant n, where symbol represents a symbol for distinguishing different pieces of time-domain carrier data, Ant represents an antenna, and cell represents a cell.

In addition, in one embodiment, as shown in FIG. 5, before operation S200, the method may include, but is not limited to, operation S 110.

At operation 5110, normalizing the multiple groups of carrier data.

It should be noted that before performing first processing on the multiple groups of carrier data according to the carrier aggregation configuration parameter, the method may further include normalizing the multiple groups of carrier data; and unifying data formats of the multiple groups of carrier data to facilitate subsequent computation. Exemplarily, amplitudes of the carrier data may be unified. For example, one group of carrier data has an amplitude of 2V, while another group of carrier data has an amplitude of 4V, then the group of carrier data with the amplitude of 2V is amplified in the amplitude to 4V, so as to facilitate subsequent computation on the two groups of carrier data. Alternatively, one group of carrier data has an amplitude of 2V, another group of carrier data has an amplitude of 4V, and yet another group of carrier data has an amplitude of 6V, then a least common multiple of the amplitudes of the three groups of carrier data is used to amplify the amplitude of each of the three groups of carrier data to 12V, so as to facilitate subsequent computation on the three groups of carrier data.

In addition, in one embodiment, as shown in FIG. 6, the operation S110 may include, but is not limited to, operation S111.

At operation 5111, amplifying the multiple groups of carrier data according to a preset standard carrier amplitude.

It should be noted that the multiple groups of carrier data may be amplified according to a preset standard carrier amplitude. Exemplarily, given three groups of carrier data with respective amplitudes of 2V, 3V and 4V, and a preset standard carrier amplitude of 12V, the amplitudes of the three groups of carrier data may be all amplified to 12V, so as to facilitate subsequent computation on the three groups of carrier data.

In addition, in one embodiment, as shown in FIG. 7, before operation S400, the method may include, but is not limited to, operation S500.

At operation S500, storing the multiple groups of time-domain carrier data in a preset storage section.

It should be noted that after the time-domain carrier aggregation data is segmented, multiple groups of time-domain carrier data can be obtained; and then, the obtained multiple groups of time-domain carrier data are stored into a preset storage section, to facilitate other subsequent data processing modules to obtain, analyze and process the corresponding time-domain carrier data. It will be understood that the multiple groups of time-domain carrier data obtained by the segmentation can be acquired and utilized by other data processing modules. Exemplarily, the digital signal processing module may read the corresponding time-domain carrier data from the preset storage section, and then perform demodulation on the time-domain carrier data to obtain an original baseband signal.

It will be understood that the storage section may be a storage section of a hardware memory, or a storage section of a virtual memory.

It is worth noting that after the time-domain carrier aggregation data is segmented, multiple groups of time-domain carrier data can be obtained; when the multiple groups of time-domain carrier data are stored, the multiple groups of time-domain carrier data may be stored in continuous preset storage sections; or the multiple groups of time-domain carrier data may be stored separately, and stored in discontinuous preset storage sections.

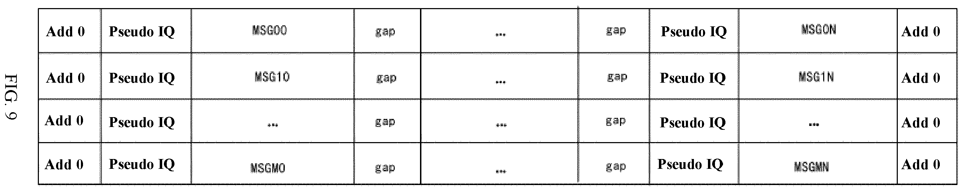

In addition, in one embodiment, the frequency-domain carrier aggregation data format may be as shown in FIG. 9, where zero adding refers to performing zero adding on the carrier data to meet the requirement of subsequent time-frequency transform; pseudo IQ means normalizing the carrier data and amplifying amplitudes of the carrier data; and MSG represents valid sampling points of the frequency-domain carrier aggregation data, and gap represents an interval between different pieces of carrier data and is used to divide different pieces of carrier data.

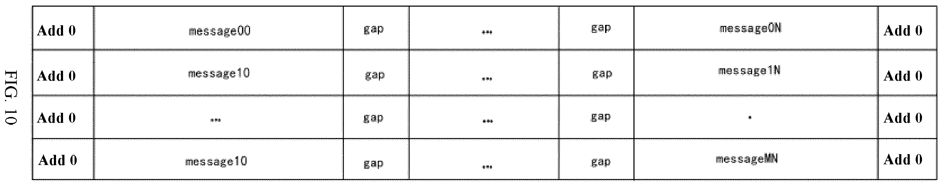

In addition, in one embodiment, the time-domain carrier aggregation data format may be as shown in FIG. 10, where zero adding refers to performing zero adding on the carrier data; message represents valid sampling points of the time-domain carrier aggregation data, i.e., real valid data information; and gap represents an interval between different pieces of time-domain carrier data and is used to divide different pieces of time-domain carrier data.

According to the technical solution provided in the embodiment, firstly, multiple groups of carrier data and a carrier aggregation configuration parameter corresponding to the carrier data are acquired; then first processing is performed on the multiple groups of carrier data according to the carrier aggregation configuration parameter to obtain frequency-domain carrier aggregation data; next, second processing is performed on the obtained frequency-domain carrier aggregation data to obtain time-domain carrier aggregation data; and finally, third processing is performed on the obtained time-domain carrier aggregation data to obtain multiple groups of time-domain carrier data. By aggregating corresponding carrier data according to the carrier aggregation configuration parameter, carrier data aggregation can be effectively managed, and the carrier data aggregation efficiency can be improved.

In addition, as shown in FIG. 12, an embodiment of the present disclosure further provides a carrier data processing apparatus 1000, including:
a first processing module 1100 configured to acquire multiple groups of carrier data and a carrier aggregation configuration parameter corresponding to the multiple groups of carrier data;
a second processing module 1200 configured to perform first processing on the multiple groups of carrier data according to the carrier aggregation configuration parameter to obtain frequency-domain carrier aggregation data;
a third processing module 1300 configured to perform second processing on the frequency-domain carrier aggregation data to obtain time-domain carrier aggregation data; and
a fourth processing module 1400 configured to perform third processing on the time-domain carrier aggregation data to obtain multiple groups of time-domain carrier data.

It should be noted that firstly, the first processing module 1100 is used to acquire multiple groups of carrier data and a carrier aggregation configuration parameter corresponding to the carrier data; then, the second processing module 1200 is used to perform first processing on the multiple groups of carrier data according to the carrier aggregation configuration parameter to obtain frequency-domain carrier aggregation data; next, the third processing module 1300 is used to perform second processing on the obtained frequency-domain carrier aggregation data to obtain time-domain carrier aggregation data; finally, the fourth processing module 1400 is used to perform third processing on the obtained time-domain carrier aggregation data to obtain multiple groups of time-domain carrier data. By aggregating corresponding carrier data according to the carrier aggregation configuration parameter, carrier data aggregation can be effectively managed, and the carrier data aggregation efficiency can be improved.

In some embodiments, the carrier data processing apparatus 1000 may further include a fifth module 1500 configured to store the multiple groups of time-domain carrier data in a preset storage section.

It should be noted that after the time-domain carrier aggregation data is segmented, multiple groups of time-domain carrier data can be obtained; and then, the fifth module 1500 is used to store the obtained multiple groups of time-domain carrier data into a preset storage section, to facilitate other subsequent data processing modules to obtain, analyze and process the corresponding time-domain carrier data. It will be understood that the multiple groups of time-domain carrier data obtained by the segmentation can be acquired and utilized by other data processing modules. Exemplarily, the digital signal processing module may read the corresponding time-domain carrier data from the preset storage section, and then perform demodulation on the time-domain carrier data to obtain an original baseband signal.

It should be noted that the carrier data processing apparatus 1000 in this embodiment and the carrier data processing method in the foregoing embodiments belong to the same inventive concept, and therefore, these embodiments have the same implementation principle and technical effect, which are not described in detail here.

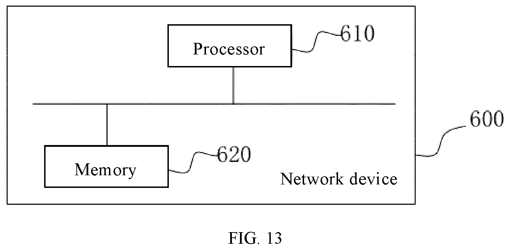

In addition, as shown in FIG. 13, an embodiment of the present disclosure further provides a network device 700, including: a memory 620, a processor 610, and a computer program stored on the memory 620 and executable by the processor 610.

The processor 610 and the memory 620 may be connected via a bus or by other means.

It should be noted that the network device 600 in this embodiment and the carrier data processing method in the foregoing embodiments belong to the same inventive concept, and therefore, these embodiments have the same implementation principle and technical effect, which are not described in detail here.

The non-transitory software programs and instructions desired for implementing the carrier data processing method of the foregoing embodiments are stored on the memory 620, and when executed by the processor 610, cause the carrier data processing method of any of the foregoing embodiments, e.g., the method operations S100 to S400 shown in FIG. 1, the method operations S210 to S230 shown in FIG. 2, the method operations S310 to S320 shown in FIG. 3, the method operations S410 to S420 shown in FIG. 4, the method operation S 110 shown in FIG. 5, the method operation S111 shown in FIG. 6, or the method operation S500 shown in FIG. 7, to be implemented.

In addition, an embodiment of the present disclosure further provides a computer-readable storage medium storing computer-executable instructions thereon which, when executed by a processor 610, e.g., one processor 610 in the embodiment of the network device 600, may cause the processor 610 to implement the carrier data processing method of any of the foregoing embodiments, e.g., the method operations S100 to S400 shown in FIG. 1, the method operations S210 to S230 shown in FIG. 2, the method operations S310 to S320 shown in FIG. 3, the method operations S410 to S420 shown in FIG. 4, the method operation S110 shown in FIG. 5, the method operation S111 shown in FIG. 6, or the method operation S500 shown in FIG. 7.

The embodiments of the present disclosure include: acquiring multiple groups of carrier data and a carrier aggregation configuration parameter corresponding to the multiple groups of carrier data. performing first processing on the multiple groups of carrier data according to the carrier aggregation configuration parameter to obtain frequency-domain carrier aggregation data; performing second processing on the frequency-domain carrier aggregation data to obtain time-domain carrier aggregation data; and performing third processing on the time-domain carrier aggregation data to obtain multiple groups of time-domain carrier data. According to the solution provided in the embodiments of the present disclosure, firstly, multiple groups of carrier data and a carrier aggregation configuration parameter corresponding to the multiple groups of carrier data are acquired; then first processing is performed on the multiple groups of carrier data according to the carrier aggregation configuration parameter to obtain frequency-domain carrier aggregation data; next, second processing is performed on the obtained frequency-domain carrier aggregation data to obtain time-domain carrier aggregation data; and finally, third processing is performed on the obtained time-domain carrier aggregation data to obtain multiple groups of time-domain carrier data. By aggregating corresponding carrier data according to the carrier aggregation configuration parameter, carrier data aggregation can be effectively managed, and the carrier data aggregation efficiency can be improved.

It will be understood by those of ordinary skill in the art that all or some operations of the above described method, and the system may be implemented as software, firmware, hardware, and suitable combinations thereof. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). The term computer storage medium includes volatile and nonvolatile, removable and non-removable media implemented in any method or technology for storage of information such as computer-readable instructions, data structures, program modules or other data, as is well known to those of ordinary skill in the art. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

While the present disclosure has been described with reference to several implementations above, the present disclosure is not limited to the above implementations, and various equivalent variations or replacements may be made by those skilled in the art without departing from the spirit of the present disclosure. Such equivalent variations or replacements fall into the scope as defined in the claims of the present disclosure.

## Claims

1. A carrier data processing method, comprising:
acquiring multiple groups of carrier data and a carrier aggregation configuration parameter corresponding to the multiple groups of carrier data;
performing first processing on the multiple groups of carrier data according to the carrier aggregation configuration parameter to obtain frequency-domain carrier aggregation data;
performing second processing on the frequency-domain carrier aggregation data to obtain time-domain carrier aggregation data; and
performing third processing on the time-domain carrier aggregation data to obtain multiple groups of time-domain carrier data.

2. The carrier data processing method according to claim 1, wherein the carrier aggregation configuration parameter comprises a carrier aggregation function switch parameter which characterizes an aggregation feature of the multiple groups of carrier data, and performing the first processing on the multiple groups of carrier data according to the carrier aggregation configuration parameter to obtain the frequency-domain carrier aggregation data comprises:
determining a carrier-to-be-merged parameter according to the aggregation features of the multiple groups of carrier data, wherein the carrier-to-be-merged parameter characterizes a group number of the carrier data to be aggregated;
determining the carrier data to be aggregated from the multiple groups of carrier data according to the carrier-to-be-merged parameter; and
merging the carrier data to be aggregated to obtain the frequency-domain carrier aggregation data.

3. The carrier data processing method according to claim 1, wherein performing the second processing on the frequency-domain carrier aggregation data to obtain the time-domain carrier aggregation data comprises:
determining valid frequency-domain carrier data from the frequency-domain carrier aggregation data, wherein the valid frequency-domain carrier data is the frequency-domain carrier aggregation data carrying valid sampling points; and
performing signal transformation on the valid frequency-domain carrier data to obtain the time-domain carrier aggregation data.

4. The carrier data processing method according to claim 1, wherein the time-domain carrier aggregation data carries carrier grouping information, and performing the third processing on the time-domain carrier aggregation data to obtain the multiple groups of time-domain carrier data comprises:
determining a group number of time-domain carriers according to the carrier grouping information; and
dividing, according to the group number of time-domain carriers, the time-domain carrier aggregation data into the multiple groups of time-domain carrier data.

5. The carrier data processing method according to claim 1, wherein before performing the first processing on the multiple groups of carrier data according to the carrier aggregation configuration parameter to obtain the frequency-domain carrier aggregation data, the method further comprises:
normalizing the multiple groups of carrier data.

6. The carrier data processing method according to claim 5, wherein normalizing the multiple groups of carrier data comprises:
amplifying the multiple groups of carrier data according to a preset standard carrier amplitude.

7. The carrier data processing method according to claim 1, wherein after performing third processing on the time-domain carrier aggregation data to obtain multiple groups of time-domain carrier data, the method further comprises:
storing the multiple groups of time-domain carrier data in a preset storage section.

8. A carrier data processing apparatus, comprising:
a first processing module configured to acquire multiple groups of carrier data and a carrier aggregation configuration parameter corresponding to the multiple groups of carrier data;
a second processing module configured to perform first processing on the multiple groups of carrier data according to the carrier aggregation configuration parameter to obtain frequency-domain carrier aggregation data;
a third processing module configured to perform second processing on the frequency-domain carrier aggregation data to obtain time-domain carrier aggregation data; and
a fourth processing module configured to perform third processing on the time-domain carrier aggregation data to obtain multiple groups of time-domain carrier data.

9. A network device, comprising:
at least one processor; and
at least one memory configured to store at least one program; wherein
the at least one program, when executed by the at least one processor, causes the carrier data processing method according to any one of claims 1 to 7 to be implemented.

10. A computer-readable storage medium storing computer-executable instructions for performing the carrier data processing method of any one of claims 1 to 7.
